(19) Europäisches Patentamt
European Patent Office
Office européen des brevets

(11) **EP 4 589 875 A1**

(12) **EUROPEAN PATENT APPLICATION**

(43) Date of publication:
**23.07.2025 Bulletin 2025/30**

(21) Application number: **24152652.4**

(22) Date of filing: **18.01.2024**

(51) International Patent Classification (IPC):
*H04L 5/00* ^(2006.01)        *H04W 24/02* ^(2009.01)

(52) Cooperative Patent Classification (CPC):
**H04W 24/02; G06N 3/044; G06N 3/045; G06N 3/08; H04L 5/001;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventors:
• **ACHARYA, Abhilash**
  **Bangalore (IN)**
• **K, Sudheendra**
  **Bangalore (IN)**
• **PAHUJA, Ghanender**
  **Bangalore (IN)**

(74) Representative: **Nokia EPO representatives
Nokia Technologies Oy
Karakaari 7
02610 Espoo (FI)**

(54) **MACHINE LEARNING -BASED SECONDARY CELL SELECTION FOR CARRIER AGGREGATION**

(57)    Devices, methods and computer programs for machine learning (ML) -based secondary cell selection for carrier aggregation (CA) are disclosed. At least some example embodiments may allow dynamically predicting a secondary cell weight parameter which may influence a network node decision in selecting secondary cells for user devices.

Train a first ML model based on time-series data of one or more key performance indicators — 301

Obtain input information related to performance of candidate secondary cells for one or more user devices within a RAN sector, the input information comprising at least a downlink throughput and/or a downlink spectral efficiency — 302

Determine a secondary cell weight parameter for each of the candidate secondary cells based at least on the obtained input information, via applying the first ML model to the obtained input information, the first ML model being configured to predict the secondary cell weight parameter for each of the candidate secondary cells, and the determined secondary cell weight parameter being for use in selecting a set of secondary cells out of the candidate secondary cells for the one or more user devices for use in carrier aggregation — 303

Periodically re-train the first ML model — 304

300

FIG. 3

**Description**

**TECHNICAL FIELD**

The disclosure relates generally to communications and, more particularly but not exclusively, to machine learning -based secondary cell selection for carrier aggregation, as well as related devices, methods and computer programs.

**BACKGROUND**

An objective of a carrier aggregation (CA) functionality is to boost peak and mean user throughput via sending user data simultaneously over two or more component carriers (CCs). Depending on applied deployment, the maximum achievable user throughput may be significantly increased compared to a non-CA case.

A user equipment (UE) that is configured for CA connects to one primary serving cell or primary cell (PCell) and one or more secondary serving cells or secondary cells (SCell).

A UE grouping feature with differentiated behavior for different users and services (such as fixed wireless access (FWA), video users, fast moving users, stationary users, etc.), allows spectrum resources to be used optimally, thereby at least in some situations being able to deliver the exact experience that a user expects.

However, if all the UEs were to have a same set of a primary cell and secondary cell(s), then these cells would quickly become fully loaded.

Accordingly, at least in some situations, there may be a need for a network to consider the load and uplink/downlink radio quality on each individual cell and distribute the UEs among the available cells, when the network starts adding more cells than the UEs can aggregate.

**BRIEF SUMMARY**

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a network node device comprises at least one processor, and at least one memory storing instructions that, when executed by the at least one processor, cause the network node device at least to obtain input information related to performance of candidate secondary cells for one or more user devices within a radio access network, RAN, sector. The input information comprises at least one of a downlink throughput, a downlink spectral efficiency, or one or more key performance indicators. The instructions, when executed by the at least one processor, further cause the network node device at least to determine a secondary cell weight parameter for each of the candidate secondary cells based at least on the obtained input information. The determined secondary cell weight parameter is for use in selecting a set of secondary cells out of the candidate secondary cells for the one or more user devices for use in carrier aggregation, CA. The determination of the secondary cell weight parameter comprises applying a first machine learning, ML, model to the obtained input information. The first ML model is configured to predict the secondary cell weight parameter for each of the candidate secondary cells.

In an example embodiment, alternatively or in addition to the above-described example embodiments, the one or more key performance indicators are obtained via a second ML model configured to forecast the one or more key performance indicators.

In an example embodiment, alternatively or in addition to the above-described example embodiments, the second ML model comprises a recurrent neural network, RNN, based ML model.

In an example embodiment, alternatively or in addition to the above-described example embodiments, the RNN based ML model comprises a time-series forecasting model.

In an example embodiment, alternatively or in addition to the above-described example embodiments, the one or more key performance indicators comprise at least one of a physical resource block utilization, PRB util, a channel quality indicator, CQI, a radio resource control connection with a user equipment, RRC Conn UE, or a received signal strength indicator on a physical uplink shared channel, RSSI PUSCH.

In an example embodiment, alternatively or in addition to the above-described example embodiments, the first ML model comprises a reinforcement learning, RL, based ML model.

In an example embodiment, alternatively or in addition to the above-described example embodiments, the RL based ML model further comprises a reward function configured to determine a reward obtained from a change applied to the secondary cell weight parameter, based at least on one of the downlink throughput or the downlink spectral efficiency for the one or more user devices.

In an example embodiment, alternatively or in addition to the above-described example embodiments, the instructions, when executed by the at least one processor, further cause the network node device to train the first ML model based on time-series data of the one or more key performance indicators.

In an example embodiment, alternatively or in addition to the above-described example embodiments, the instructions, when executed by the at least one processor, further cause the network node device to periodically re-train the first ML model.

An example embodiment of a method comprises obtaining, by a network node device, input information related to performance of candidate secondary cells for one or more user devices within a radio access network, RAN, sector. The input information comprises at least one of a downlink throughput, a downlink spectral efficiency, or one or more key performance indicators. The method further comprises determining, by the network node device, a secondary cell weight parameter for each of the candidate secondary cells based at least on the obtained input information. The determined secondary cell weight parameter is for use in selecting a set of secondary cells out of the candidate secondary cells for the one or more user devices for use in carrier aggregation, CA. The determination of the secondary cell weight parameter comprises applying a first machine learning, ML, model to the obtained input information. The first ML model is configured to predict the secondary cell weight parameter for each of the candidate secondary cells.

An example embodiment of an apparatus comprises means for carrying out a method according to any of the above-described example embodiments.

An example embodiment of a computer program comprises instructions for causing a network node device to perform at least the following: obtaining input information related to performance of candidate secondary cells for one or more user devices within a radio access network, RAN, sector, the input information comprising at least one of a downlink throughput, a downlink spectral efficiency, or one or more key performance indicators; and determining a secondary cell weight parameter for each of the candidate secondary cells based at least on the obtained input information, the determined secondary cell weight parameter being for use in selecting a set of secondary cells out of the candidate secondary cells for the one or more user devices for use in carrier aggregation, CA. The determination of the secondary cell weight parameter comprises applying a first machine learning, ML, model to the obtained input information. The first ML model is configured to predict the secondary cell weight parameter for each of the candidate secondary cells.

## DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:

**FIG. 1** shows an example embodiment of the subject matter described herein illustrating an example system, where various embodiments of the present disclosure may be implemented;

**FIG. 2** shows an example embodiment of the subject matter described herein illustrating a network node device;

**FIG. 3** shows an example embodiment of the subject matter described herein illustrating a method for the network node device of Fig. 2;

**FIG. 4** shows an example embodiment of the subject matter described herein illustrating an end-to-end flow of a disclosed machine learning -based secondary cell selection for carrier aggregation;

**FIG. 5** shows an example embodiment of the subject matter described herein illustrating disclosed hyper-features;

**FIG. 6** shows an example embodiment of the subject matter described herein illustrating disclosed time-series input data for model training;

**FIG. 7** shows an example embodiment of the subject matter described herein illustrating an overall view of a disclosed model training;

**FIG. 8** shows an example embodiment of the subject matter described herein illustrating disclosed key performance indicators at a current aggregation period start time versus at a previous aggregation period start time;

**FIG. 9** shows an example embodiment of the subject matter described herein illustrating a disclosed reward calculation;

**FIG. 10** shows an example embodiment of the subject matter described herein further illustrating the disclosed reward calculation;

**FIG. 11** shows an example embodiment of the subject matter described herein illustrating a disclosed key performance indicator feedback score calculation;

**FIG. 12** shows an example embodiment of the subject matter described herein illustrating a disclosed data preparation;

**FIG. 13** shows an example embodiment of the subject matter described herein illustrating a disclosed one-sample t-test; and

**FIG. 14** shows an example embodiment of the subject matter described herein illustrating a disclosed inference mapping for configuration management provisioning.

Like reference numerals are used to designate like parts in the accompanying drawings.

## DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

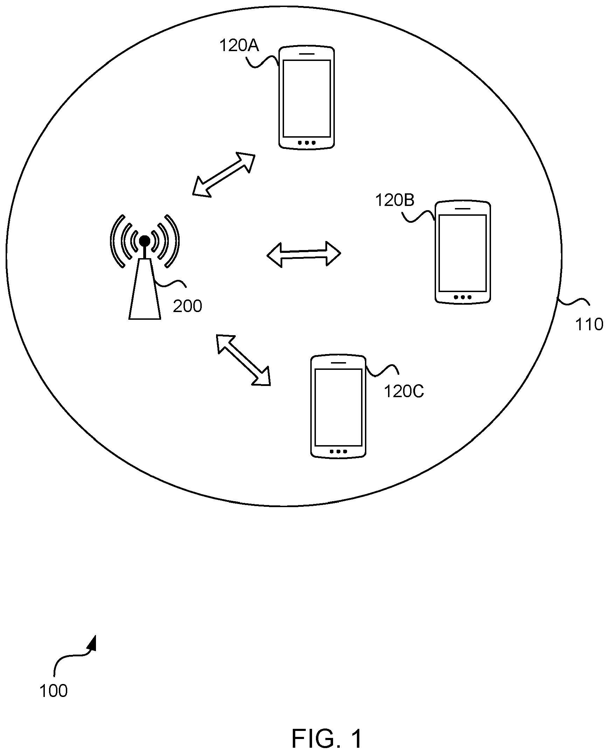

Fig. 1 illustrates example system 100, where various embodiments of the present disclosure may be implemented. The system 100 may comprise a radio access network (RAN) 110 of a fifth generation (5G) new radio (NR) network or a network beyond 5G wireless networks. An example representation of system 100 is shown depicting network node device 200 and user devices 120A, 120B, 120C. At least in some embodiments, RAN 110 may be comprised in a massive machine-to-machine (M2M) network, massive machine type communications (mMTC) network, internet of things (IoT) network, industrial internet-of-things (IIoT) network, enhanced mobile broadband (eMBB) network, ultra-reliable low-latency communication (URLLC) network, and/or the like. In other words, RAN 110 may be configured to serve diverse service types and/or use cases.

User devices 120A, 120B, 120C may include, e.g., a mobile phone, a smartphone, a tablet computer, a smart watch, or any hand-held, portable and/or wearable device. User devices 120A, 120B, 120C may also be referred to as a user equipment (UE). Network node device 200 may comprise, e.g., a base station. The base station may include, e.g., any device suitable for providing an air interface for user devices 120A, 120B, 120C to connect to a wireless network via wireless transmissions.

In the following, various example embodiments will be discussed. At least some of these example embodiments described herein may allow machine learning (ML) -based secondary cell selection for carrier aggregation.

Furthermore, at least some of the example embodiments described herein may allow dynamically predicting a secondary cell weight parameter which may influence a network node decision in selecting secondary cells for user devices.

Furthermore, at least some of the example embodiments described herein may allow leveraging ML algorithms to forecast expected load and quality in advance, and optimally set weights of candidate secondary cells within a sector to be considered for CA Scell addition for a group of UEs. At least some of the example embodiments described herein may have a self-learning capability with a continuous feedback loop mechanism, thereby being able to adapt to varying traffic demand across different UE groups and able to consider those secondary cells during Scell addition that may bring the best gain in terms downlink (DL) UE throughput and DL spectral efficiency.

Furthermore, at least some of the example embodiments described herein may allow setting an optimal value for the secondary cell weight parameter for each cell within a sector in consideration of the impact on overall cell performance key performance indicators (KPIs) from a KPI feedback loop, the DL UE throughput, and the DL spectral efficiency.

Furthermore, at least some of the example embodiments described herein may allow leveraging a forecasting model to forecast the expected load and quality of each cell. At least in some embodiments, performance benchmarking of the forecasting model may be done, e.g., based on a mean absolute percentage error (MAPE) across all the feature forecasting:

$$M = \frac{1}{n}\sum_{t=1}^{n}\left|\frac{A_t - F_t}{A_t}\right|,$$

in which M denotes an absolute percentage error, n denotes the number of times a summation iteration occurs, $A_t$ denotes an actual value, and $F_t$ denotes a forecast value.

Furthermore, at least some of the example embodiments described herein may allow benchmarking the classification of the change in weight per cell functionally with a baseline scenario (with static settings for the secondary cell weight parameter) to gauge the additional gains it may bring in with respect to the following end-user performance metrics: DL UE throughput and DL spectral efficiency.

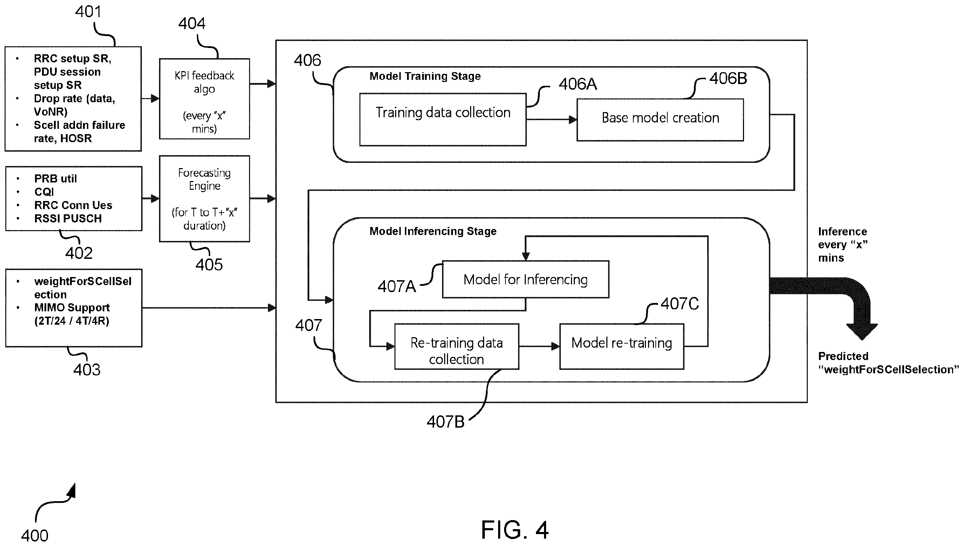

Furthermore, at least some of the example embodiments described herein may allow optimally setting the secondary cell weight parameter for each cell within a sector based on forecasting of input features, KPI feedback and rewards observed on changes applied. The end-to-end flow of this process is shown in diagram 400 of Fig. 4. Diagram 400 includes inputs 401-403, KPI feedback 404, forecasting 405, model training 406, 406A, 606B, and model inferencing 407, 407A, 407B, 407C. The inputs, KPI feedback, forecasting, model training, and model inferencing will be described in detail below. In the figures, "x" represents an inferencing periodicity.

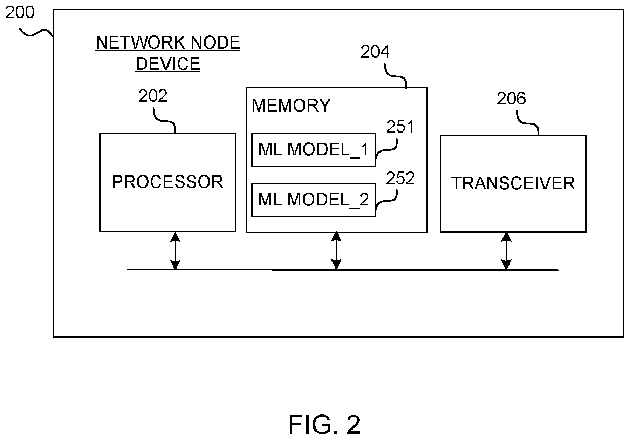

Fig. 2 is a block diagram of network node device 200, in accordance with an example embodiment.

Network node device 200 comprises one or more processors 202 and one or more memories 204 that comprise computer program code. Network node device 200 may also include other elements, such as transceiver 206 configured to enable network node device 200 to transmit and/or receive information to/from other devices, as well as other elements not shown in Fig. 2. In one example, network node device 200 may use transceiver 206 to transmit or receive signaling information and data in accordance with at least one cellular communication protocol. Transceiver 206 may be configured to provide at least one wireless radio connection, such as for example a 3GPP mobile broadband connection (e.g., 5G or beyond). Transceiver 206 may comprise, or be configured to be coupled to, at least one antenna to transmit and/or receive radio frequency signals.

Although network node device 200 is depicted to include only one processor 202, network node device 200 may include more processors. In an embodiment, memory 204 is capable of storing instructions, such as an operating system and/or various applications. Furthermore, memory 204 may include a storage that may be used to store, e.g., at least some of the information and data used in the disclosed embodiments, such as machine learning (ML) models 251, 252 described in more detail below.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random access memory), etc.).

Network node device 200 may comprise a base station. The base station may include, e.g., a 5G base station (gNB) or any such device providing an air interface for user devices 120A, 120B, 120C to connect to a wireless network via wireless transmissions.

When executed by at least one processor 202, instructions stored in at least one memory 204 cause network node device 200 at least to obtain input information related to performance of candidate secondary cells for one or more user devices 120A, 120B, 120C within a RAN 110 sector.

The input information comprises at least a downlink throughput, a downlink spectral efficiency, and/or one or more key performance indicators. For example, the one or more key performance indicators may comprise a physical resource block utilization (PRB util), a channel quality indicator (CQI), a radio resource control connection with a user equipment (RRC Conn UE), and/or a received signal strength indicator on a physical uplink shared channel (RSSI PUSCH).

At least in some embodiments, the one or more key performance indicators may be obtained via second ML model 252 configured to forecast the one or more key performance indicators. For example, second ML model 252 may comprise a recurrent neural network (RNN) based ML model. For example, the RNN based ML model may comprise a time-series forecasting model, such as a long shortterm memory (LSTM) based ML model.

The instructions, when executed by at least one processor 202, further cause network node device 200 at least to determine a secondary cell weight parameter (e.g., a "weightForSCellSelection") for each of the candidate secondary cells based at least on the obtained input information. The determined secondary cell weight parameter is for use in selecting a set of secondary cells out of the candidate secondary cells for one or more user devices 120A, 120B, 120C for use in carrier aggregation (CA).

The determination of the secondary cell weight parameter comprises applying first machine learning (ML) model 251 to the obtained input information. First ML model 251 is configured to predict the secondary cell weight parameter for each of the candidate secondary cells.

For example, first ML model 251 may comprise a reinforcement learning, RL, based ML model. For example, the RL based ML model may comprise a deep Q-network (DQN) based ML model.

At least in some embodiments, the RL based ML model may further comprise a reward function configured to determine a reward obtained from a change applied to the secondary cell weight parameter, based at least on the downlink throughput and/or the downlink spectral efficiency for one or more user devices 120A, 120B, 120C.

At least in some embodiments, the instructions, when executed by at least one processor 202, may further cause network node device 200 to train first ML model 251 based on time-series data of the one or more key performance indicators.

At least in some embodiments, the instructions, when executed by at least one processor 202, may further cause network node device 200 to periodically re-train first ML model 251.

In other words, the Scell candidate weight prediction may leverage a reinforcement learning algorithm (Deep Q-Learning Network, DQN) for predicting the optimal value to be set for the secondary cell weight parameter for each cell within a sector.

The input data structure may comprise at least some of the following which may be consumed across different stages in the modelling:

1. model inputs for inferencing per UE group may include, e.g., PRB util, CQI, RRC Conn UE, and/or RSSI PUSCH. Forecasting may be done for the KPIs, and predicted values may go in as input to first ML model 251 for inferencing.
2. configuration data input to first model 251 may include, e.g., weightForSCellSelection, and/or MIMO Support (2T/2R, 4T/4R).
3. KPI inputs into the DQN reward function may include, e.g., DL_UE_throughput, and/or DL_spectral_efficiency.
4. KPI monitoring feedback in reward calculation may use, e.g., RRC setup SR, PDU session setup SR, drop rate (data, VoNR), Scell addition failure rate, and/or handover (HO) success rate.

First ML model 251 input for inference may comprise, e.g., the above-mentioned KPIs which may be applied through the forecasting engine to predict the values for the upcoming periodicity and provided to first ML model 251 for inferencing.

The forecasting plays a role in ensuring that the prediction is proactive since the KPI values considered may be predicted for the upcoming duration, i.e., for inferencing done at a timestamp t, the KPI forecasting values considered are for timestamp "t + inference_periodicity".

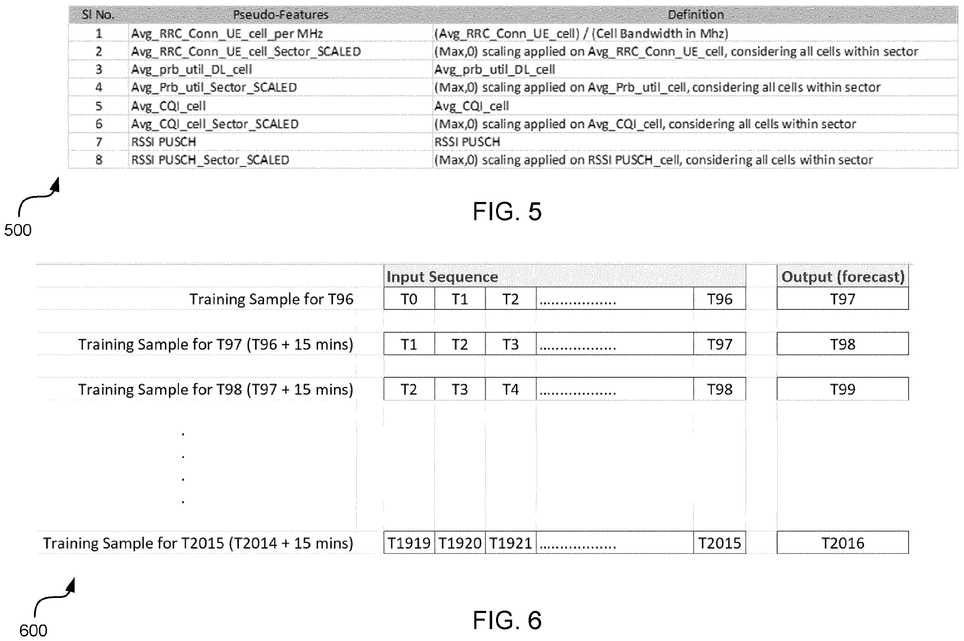

In reference to the forecasted base features, some feature engineering may be done to create at least some of the hyper-features illustrated in diagram 500 of Fig. 5.

An objective of the forecasting is to perform time-series forecasting of at least some of the following KPIs which are input to the prediction of first ML model 251: a DL PRB util, an average CQI, an average RRC Conn UE, and/or an average RSSI PUSCH.

The forecasting may leverage an RNN - LSTM based model (such as second ML model 252) for forecasting the features listed above. This is a univariate forecasting problem, so an LSTM model with, e.g., a single hidden LSTM layer and 1 output layer may suffice to forecast with reasonable precision.

At least in some embodiments, first ML model 251 may use time-series data of the above listed KPIs for model training purposes. The time-series input data may span across, e.g., three weeks with an aggregation periodicity "P" and may be arranged in tuples with "T_input" as input time-step and "T_output" as output time-step, for example.

Diagram 600 of Fig. 6 illustrates an example of this, showing KPI time-series data with 15 minutes (P) aggregation. Overall, the sequence may comprise, e.g., 2016 samples. Considering daily seasonality prevalent in the data, the tuples may need to consider oneday data in the input stream (96 values) to predict the next 15 minutes KPI value (1 value, which is the next in the time-series data), which implies that T_input = 96 and T_output = 1.

For inferencing, the trained first ML model 251 may be invoked with an input tuple with 96 values. The samples in the input tuple may be the immediately preceding historical time-series samples starting from the current timestamp when the forecasting is triggered. I.e., if the current timestamp is T_0, the input tuple may comprise values (T_-96 to T_0) and the output from the forecasting model may be for timestamp T_1, considering the next 15 minutes from current, i.e., T_0 + 15 minutes.

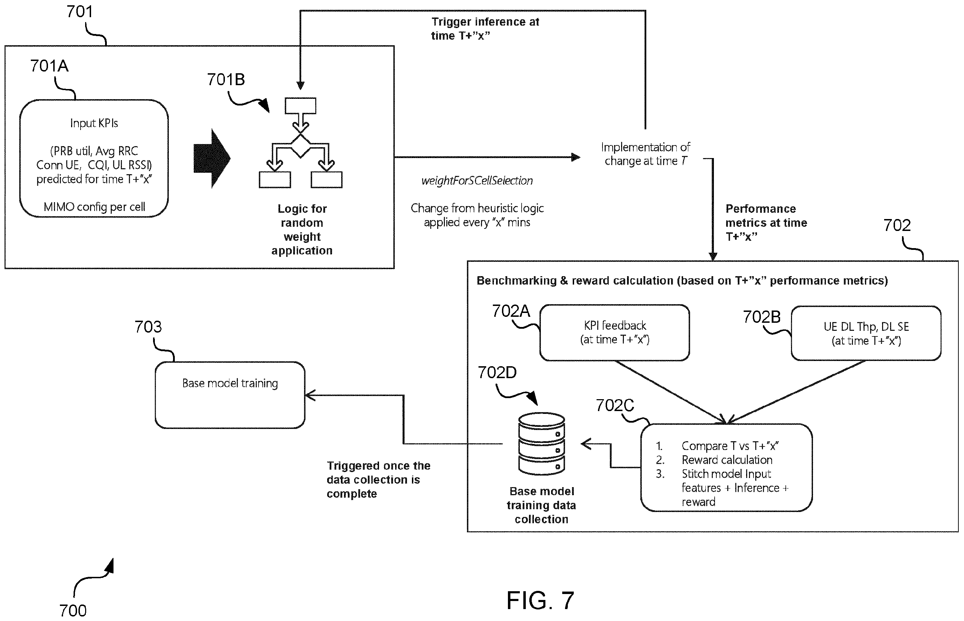

A training phase may cover, e.g., base training of first ML model 251 when deployed, and further batch re-training cycles to enhance a knowledge base of first ML model 251 with feedback from the environment based on changes applied, as illustrated in overview diagram 700 of Fig. 7. Diagram 700 includes inferencing 701, 701A, 701B, benchmarking, reward calculation and training data collection 702, 702A, 702B, 702C, 702D, and base training 703 of first ML model 251.

Training periodicity: overall, e.g., seven days of data may be collected for the base training of first ML model 251. The data may be aggregated as per an optimization cycle duration and correlated along with CIO/TTT.

For the re-training of first ML model 251, an example approach is to go for batch re-training every twelve hours in a closed loop.

Training data preparation for first ML model 251 training and re-training may include at least some of the following.

Step 1: performance and configuration data collection may be done as scheduled.

Step 2: the KPIs may be aggregated as per the optimization periodicity configured.

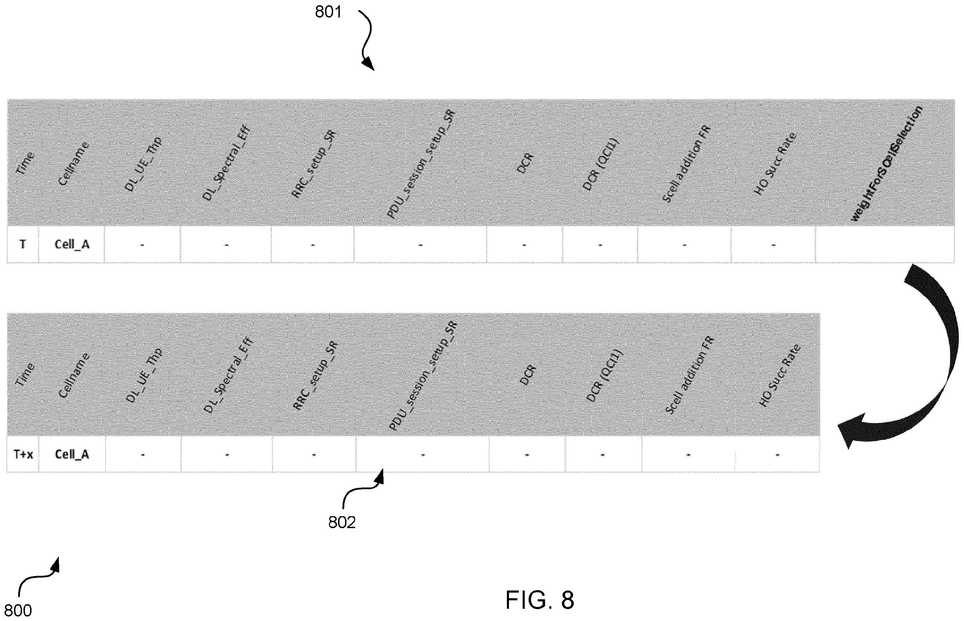

Step 3: the parameter change inferred by first ML model 251 may be categorical and may take any of three possible outcomes which are increase / decrease / no change. The performance KPIs may be benchmarked as observed in a current aggregation period start time 802 versus a previous aggregation period start time 801, as illustrated in diagram 800 of Fig. 8. In other words, the reward calculation may be based on the change observed in the KPIs.

Based on a temporal comparison of the performance data across consecutive inference cycles, an overall reward may be calculated, as described below, and the same may be associated with a parameter change applied in the cell.

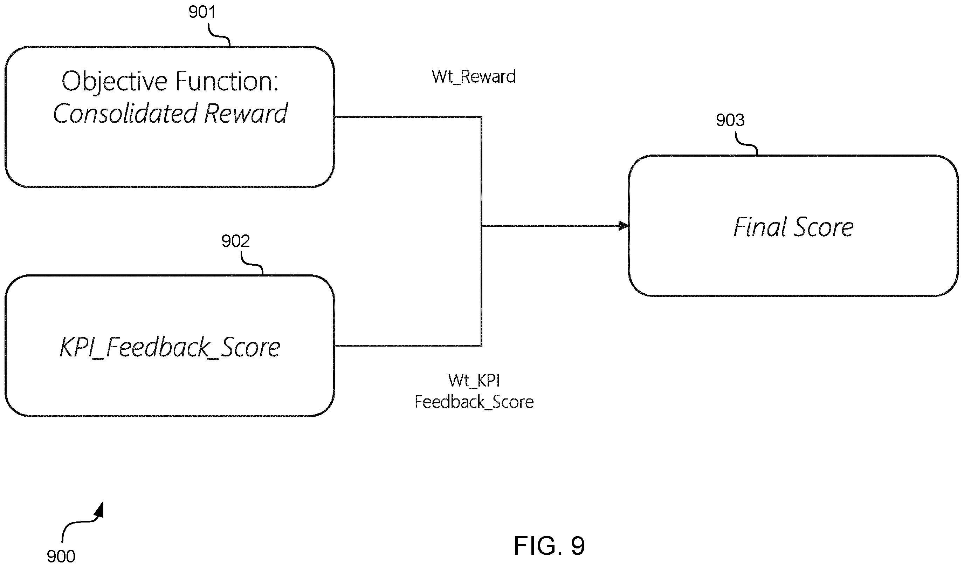

As illustrated in diagram 900 of Fig. 9, the disclosed reward function (e.g., integrated in the DQN core) may comprise, e.g., objective function 901 (e.g., based on DL UE throughput and DL spectral efficiency), and KPI feedback score 902, based on which final score 903 may be determined.

Events across consecutive inference cycles (for example, "T" & "T+x") may be compared, and the feature values may be fed to the reward function to determine the reward obtained from the change applied to the secondary cell weight parameter.

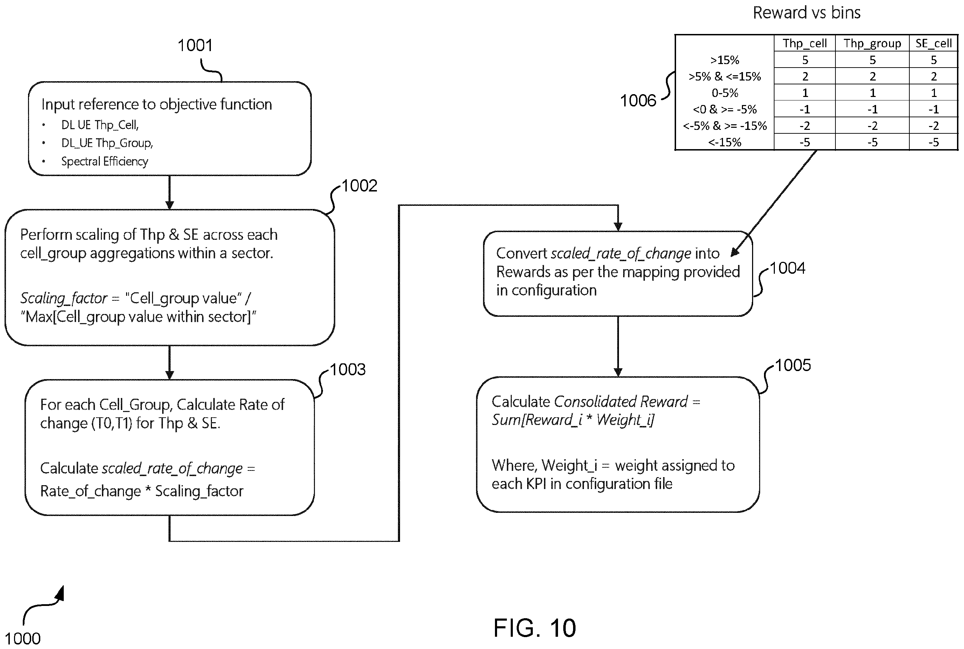

As illustrated in diagram 1000 of Fig. 10, reward calculation logic for objective function 901 may include, e.g., the following.

The objective function may take DL_UE_throughput and DL_spectral_efficiency KPIs as input for calculating the reward attributed with the change applied to the secondary cell weight parameter:

Step 1001 of the reward calculation logic for the objective function: the following KPIs may be considered for reward calculation: DL_UE_throughput_cell, DL_UE_throughput_sector, and/or DL_spectral_efficiency.

Step 1002 of the reward calculation logic for the objective function: the individual KPI values of a cell within a sector may be scaled with respect to the KPI values of the other cells within the sector:

$$\text{scaling\_factor} \ = \ \text{"Cell/Group\_value"} \ / \ \text{"Max[Cell/Group value within sector]"}.$$

Step 1003 of the reward calculation logic for the objective function: for any two consecutive timeperiods, the rate of change across the time periods may be calculated and scaled with the KPI scaling factor determined in the previous step for that time period:

$$\text{scaled\_rate\_of\_change} = \text{rate\_of\_change} * \text{scaling\_factor}.$$

Step 1004 of the reward calculation logic for the objective function: the "scaled_rate_of_change" may be translated into rewards as per the values specified in mapping table 1006.

Step 1005 of the reward calculation logic for the objective function: the consolidated reward (which is the weighted sum of the rewards calculated per KPI) may be calculated:

$$\text{Consolidated} \ \ \text{Reward} \ = \ \text{Sum} \ \ [\text{Reward\_i} \ * \ \text{Weight\_i}],$$

in which Weight_i denotes a weight assigned to each KPI in configuration file.

Then, the calculated objective function reward may be taken into consideration for the final reward calculation along with the KPI feedback score, as described below.

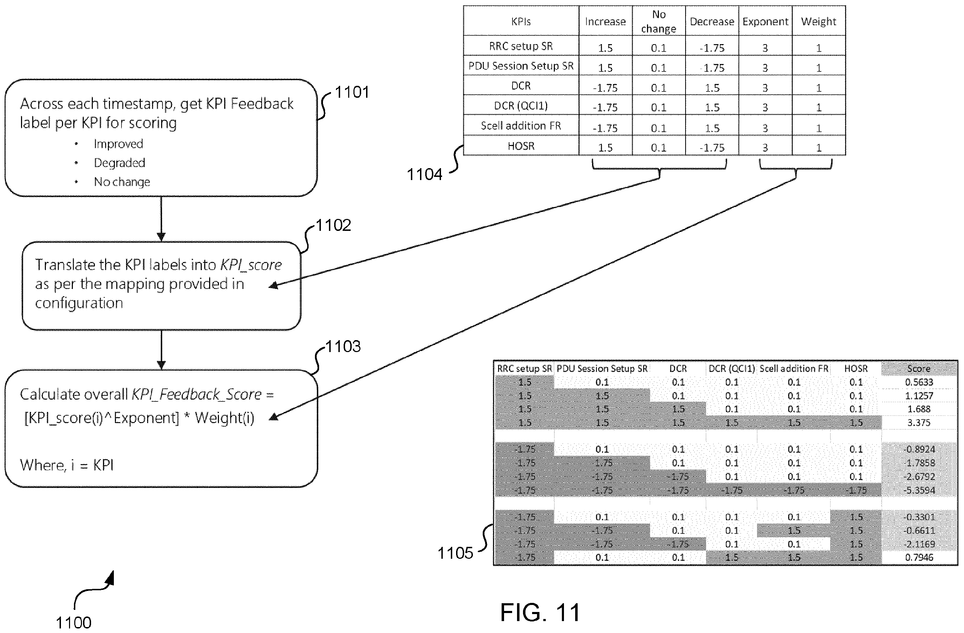

As illustrated in diagram 1100 of Fig. 11, at least in some embodiments, the KPI feedback score calculation may be based on an output of the KPI monitoring feedback, which may be categorical and in the form of, e.g., increase, decrease, or no_change:

Step 1101 of the KPI feedback score calculation: for each KPI and timestamp, the KPI monitoring feedback output may be referred to, which may be increase, decrease, or no_change.

Step 1102 of the KPI feedback score calculation: translation of the KPI feedback label may be performed based on mapping 1104 of score to KPI and label.

Step 1103 of the KPI feedback score calculation: overall score 1105 may be calculated, e.g., as per the equation below:

$$KPI\_Feedback\_Score = [KPI\_score(i)^\wedge Exponent] *$$
$$Weight(i)$$

in which i denotes KPI.

Then, calculated KPI_Feedback_Score 1105 may be taken into consideration for the final reward calculation.

The KPI monitoring feedback for generating the KPI trend change labels is described below.

An objective of the KPI monitoring feedback is to statistically evaluate the cell performance with historical values and infer the change in trend.

Step 1 of the KPI monitoring feedback: at least some of the following KPIs may be aggregated as per the inference periodicity considered for the Scell weight prediction: RRC setup SR, PDU session setup SR, drop rate (data, VoNR), Scell addition failure rate, and/or HO success rate.

Step 2 of the KPI monitoring feedback: data for statistical evaluation may be generated by taking the aggregated KPI value for a current timestamp along with the values from, e.g., the last three weeks, for the same timestamp.

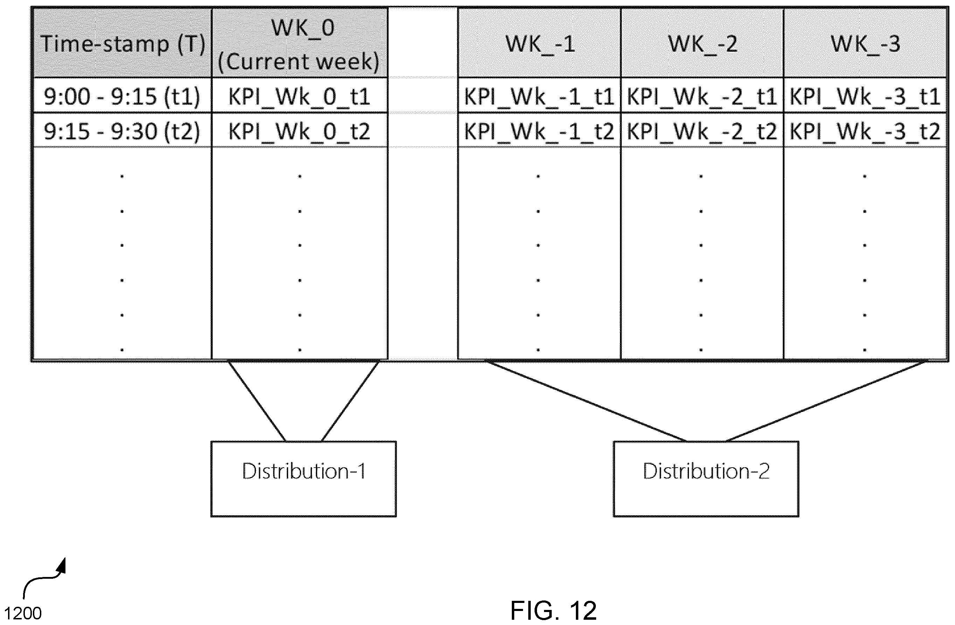

Diagram 1200 of Fig. 12 illustrates the data preparation, considering 15 minutes of data aggregation.

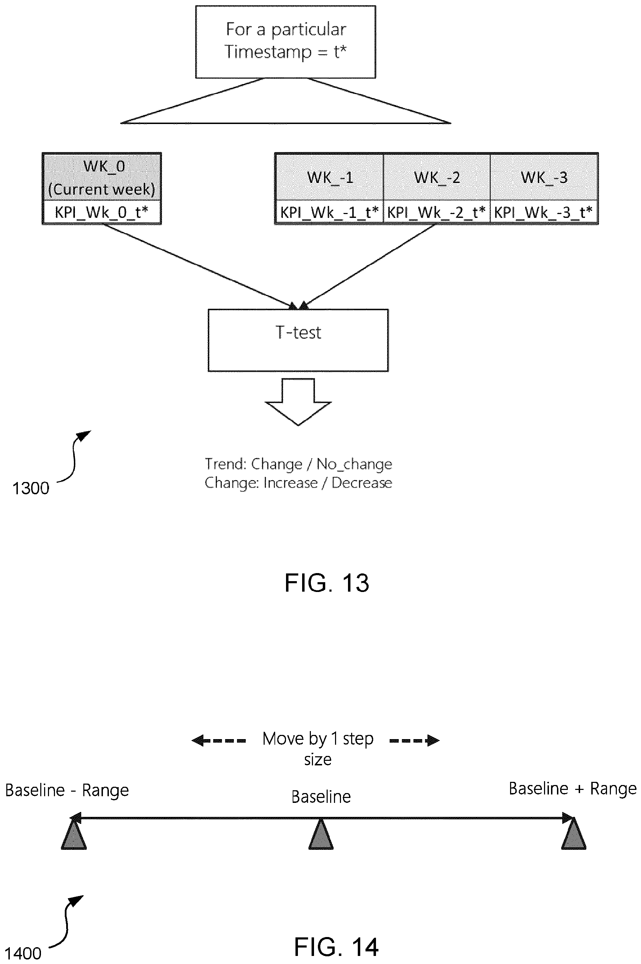

Step 3 of the KPI monitoring feedback: to determine the KPI trend change, the data sequence, i.e., distribution-1 and distribution-2 for each timestamp may be applied onto a one-sample t-test (described below and illustrated in diagram 1300 of Fig. 13) to statistically derive a change in the KPI trend.

The one-sample t-test is a statistical hypothesis test used to determine whether the mean calculated from sample data collected from a single group is different from a designated value. The one-sample t-test determines if there is enough evidence to reject a null hypothesis (H0) in favor of an alternative hypothesis (H1). The null hypothesis for a one-sample t-test may be stated, e.g., as: "the population mean equals the specified mean value". The alternative hypothesis for a one-sample t-test may be stated as: "the population mean is different from the specified mean value".

An outcome of the test may include a p-value and a t-statistic. The p-value may define whether there is a change in trend, and the t-statistic may define whether the KPI value is increased or decreased:

p-value < 0.05: reject null hypothesis, i.e., both groups are different; and
p-value > 0.05: null hypothesis is true, i.e., both groups are the same.
t-statistic > 0 signifies "increased", and
t-statistic < 0 signifies "reduced".

Inference mapping of first ML model 251 for configuration management (CM) provisioning (in post-processing) is described next.

At least in some embodiments, first ML model 251 may provide the inference to a post-processing component in the form of a predicted category, such as increase / decrease / no change for the secondary cell weight parameter.

The post-processing component may apply the change over the current set parameter value, considering the range and step-size set in the configuration, as illustrated in diagram 1400 of Fig. 14.

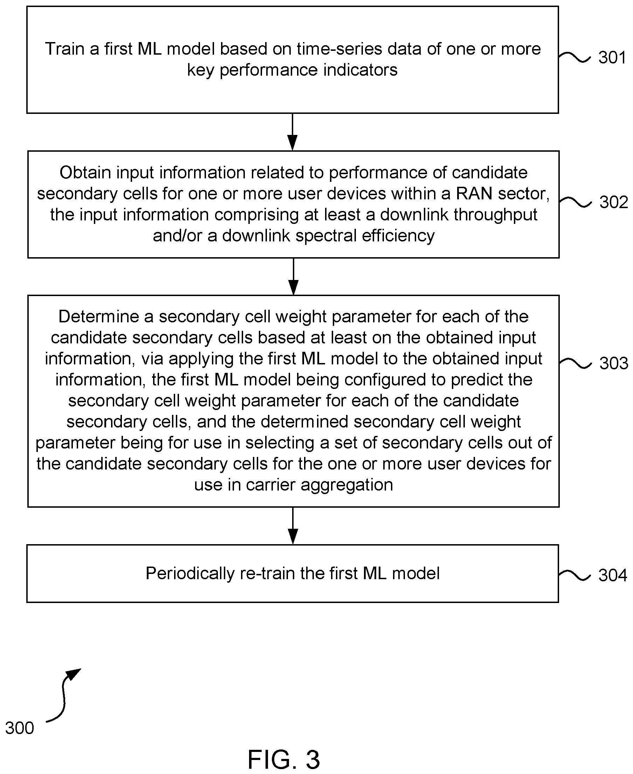

Fig. 3 illustrates an example flow chart of method 300 for network node device 200, in accordance with an example embodiment.

At optional operation 301, network node device 200 may train first ML model 251 based on the time-series data of the one or more key performance indicators.

At operation 302, network node device 200 obtains the input information related to the performance of the candidate secondary cells for one or more user devices 120A, 120B, 120C within the RAN 110 sector. As discussed above in more detail, the input information comprises at least the downlink throughput, the downlink spectral efficiency, and/or one or more key performance indicators.

At operation 303, network node device 200 determines the secondary cell weight parameter for each of the candidate secondary cells based at least on the obtained input information. As discussed above in more detail, the determined secondary cell weight parameter is for use in selecting the set of secondary cells out of the candidate secondary cells for one or more user devices 120A, 120B, 120C for use in CA. As also discussed above in more detail, the determination 303 of the secondary cell weight parameter comprises applying first ML model 251 to the obtained input information, and first ML model 251 is configured to predict the secondary cell weight parameter for each of the candidate secondary cells.

At optional operation 304, network node device 200 may periodically re-train first ML model 251.

Embodiments and examples with regard to Fig. 3 may be carried out by network node device 200 of Fig. 2. Operations 301-304 may, for example, be carried out by at least one processor 202 and at least one memory 204. Further features of method 300 directly resulting from the functionalities and parameters of network node device 200 are not repeated here. Method 300 can be carried out by computer programs or portions thereof.

Another example of an apparatus suitable for carrying out the embodiments and examples with regard to Fig. 3 comprises means for:

obtaining, at operation 302, the input information related to the performance of the candidate secondary cells for one or more user devices 120A, 120B, 120C within the RAN 110 sector, the input information comprising at least one of the downlink throughput, the downlink spectral efficiency, or one or more key performance indicators; and determining, at operation 303, the secondary cell weight parameter for each of the candidate secondary cells based at least on the obtained input information, the determination of the secondary cell weight parameter comprising applying first ML model 251 to the obtained input information, first ML model 251 being configured to predict the secondary cell weight parameter for each of the candidate secondary cells, and the determined secondary cell weight parameter being for use in selecting the set of secondary cells out of the candidate secondary cells for one or more user devices 120A, 120B, 120C for use in CA.

The functionality described herein can be performed, at least in part, by one or more computer program product components such as software components. According to an embodiment, network node device 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

In the disclosed example embodiments, it may be possible to train one ML model / NN with a specific architecture, then derive another ML model / NN from that using processes such as compilation, pruning, quantization or distillation. The ML model / NN may be executed using any suitable apparatus, for example a CPU, GPU, ASIC, FPGA, compute-in-memory, analog, or digital, or optical apparatus. It is also possible to execute the ML model / NN in an apparatus that combines features from any number of these, for instance digital-optical or analog-digital hybrids. In some examples, weights and required computations in these systems may be programmed to correspond to the ML model / NN. In some examples, the apparatus may be designed and manufactured so as to perform the task defined by the ML model / NN so that the apparatus is configured to perform the task when it is manufactured without the apparatus being programmable as such.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. A network node device (200), comprising:

at least one processor (202); and
at least one memory (204) storing instructions that, when executed by the at least one processor (202), cause the network node device (200) at least to:

obtain input information related to performance of candidate secondary cells for one or more user devices (120A, 120B, 120C) within a radio access network, RAN, (110) sector, the input information comprising at least one of a downlink throughput, a downlink spectral efficiency, or one or more key performance indicators; and

determine a secondary cell weight parameter for each of the candidate secondary cells based at least on the obtained input information, the determined secondary cell weight parameter being for use in selecting a set of secondary cells out of the candidate secondary cells for the one or more user devices (120A, 120B, 120C) for use in carrier aggregation, CA;

wherein the determination of the secondary cell weight parameter comprises applying a first machine learning, ML, model (251) to the obtained input information, the first ML model (251) being configured to predict the secondary cell weight parameter for each of the candidate secondary cells.

2. The network node device (200) according to claim 1, wherein the one or more key performance indicators are obtained via a second ML model (252) configured to forecast the one or more key performance indicators.

3. The network node device (200) according to claim 2, wherein the second ML model (252) comprises a recurrent neural network, RNN, based ML model.

4. The network node device (200) according to claim 3, wherein the RNN based ML model comprises a time-series forecasting model.

5. The network node device (200) according to any of claims 1 to 4, wherein the one or more key performance indicators comprise at least one of a physical resource block utilization, PRB util, a channel quality indicator, CQI, a radio resource control connection with a user equipment, RRC Conn UE, or a received signal strength indicator on a physical uplink shared channel, RSSI PUSCH.

6. The network node device (200) according to any of claims 1 to 5, wherein the first ML model (251) comprises a reinforcement learning, RL, based ML model.

7. The network node device (200) according to claim 6, wherein the RL based ML model further comprises a reward function configured to determine a reward obtained from a change applied to the secondary cell weight parameter, based at least on one of the downlink throughput or the downlink spectral efficiency for the one or more user devices (120A, 120B, 120C).

8. The network node device (200) according to any of claims 1 to 7, wherein the instructions, when executed by the at least one processor (202), further cause the network node device (200) to train the first ML model (251) based on time-series data of the one or more key performance indicators.

9. The network node device (200) according to claim 8, wherein the instructions, when executed by the at least one processor (202), further cause the network node device (200) to periodically re-train the first ML model (251).

10. A method (300), comprising:

obtaining (302), by a network node device (200), input information related to performance of candidate secondary cells for one or more user devices (120A, 120B, 120C) within a radio access network, RAN, (110) sector, the input information comprising at least one of a downlink throughput, a downlink spectral efficiency, or one or more key performance indicators; and

determining (303), by the network node device (200), a secondary cell weight parameter for each of the candidate secondary cells based at least on the obtained input information, the determined secondary cell weight parameter being for use in selecting a set of secondary cells out of the candidate secondary cells for the one or more user devices (120A, 120B, 120C) for use in carrier aggregation, CA;

wherein the determination (303) of the secondary cell weight parameter comprises applying a first machine learning, ML, model (251) to the obtained input information, the first ML model (251) being configured to predict the secondary cell weight parameter for each of the candidate secondary cells.

**11.** An apparatus, comprising means for carrying out the method (300) according to claim 10.

**12.** A computer program comprising instructions for causing a network node device to perform at least the following:

obtaining input information related to performance of candidate secondary cells for one or more user devices within a radio access network, RAN, sector, the input information comprising at least one of a downlink throughput, a downlink spectral efficiency, or one or more key performance indicators; and
determining a secondary cell weight parameter for each of the candidate secondary cells based at least on the obtained input information, the determined secondary cell weight parameter being for use in selecting a set of secondary cells out of the candidate secondary cells for the one or more user devices (120A, 120B, 120C) for use in carrier aggregation, CA;
wherein the determination of the secondary cell weight parameter comprises applying a first machine learning, ML, model to the obtained input information, the first ML model being configured to predict the secondary cell weight parameter for each of the candidate secondary cells.

FIG. 1

200

NETWORK NODE
DEVICE

204

202

MEMORY

251

ML MODEL_1

PROCESSOR

252

ML MODEL_2

206

TRANSCEIVER

FIG. 2

Train a first ML model based on time-series data of one or more key performance indicators ~ 301

Obtain input information related to performance of candidate secondary cells for one or more user devices within a RAN sector, the input information comprising at least a downlink throughput and/or a downlink spectral efficiency ~ 302

Determine a secondary cell weight parameter for each of the candidate secondary cells based at least on the obtained input information, via applying the first ML model to the obtained input information, the first ML model being configured to predict the secondary cell weight parameter for each of the candidate secondary cells, and the determined secondary cell weight parameter being for use in selecting a set of secondary cells out of the candidate secondary cells for the one or more user devices for use in carrier aggregation ~ 303

Periodically re-train the first ML model ~ 304

300

FIG. 3

FIG. 4

| SI No. | Pseudo-Features | Definition |
|---|---|---|
| 1 | Avg_RRC_Conn_UE_cell_per MHz | (Avg_RRC_Conn_UE_cell) / (Cell Bandwidth in Mhz) |
| 2 | Avg_RRC_Conn_UE_cell_Sector_SCALED | (Max,0) scaling applied on Avg_RRC_Conn_UE_cell, considering all cells within sector |
| 3 | Avg_prb_util_DL_cell | Avg_prb_util_DL_cell |
| 4 | Avg_Prb_util_Sector_SCALED | (Max,0) scaling applied on Avg_Prb_util_cell, considering all cells within sector |
| 5 | Avg_CQI_cell | Avg_CQI_cell |
| 6 | Avg_CQI_cell_Sector_SCALED | (Max,0) scaling applied on Avg_CQI_cell, considering all cells within sector |
| 7 | RSSI PUSCH | RSSI PUSCH |
| 8 | RSSI PUSCH_Sector_SCALED | (Max,0) scaling applied on RSSI PUSCH_cell, considering all cells within sector |

## FIG. 5

500

| | Input Sequence | | | | | Output (forecast) |
|---|---|---|---|---|---|---|
| Training Sample for T96 | T0 | T1 | T2 | ................. | T96 | T97 |
| Training Sample for T97 (T96 + 15 mins) | T1 | T2 | T3 | ................. | T97 | T98 |
| Training Sample for T98 (T97 + 15 mins) | T2 | T3 | T4 | ................. | T98 | T99 |
| . | | | | | | |
| . | | | | | | |
| . | | | | | | |
| . | | | | | | |
| Training Sample for T2015 (T2014 + 15 mins) | T1919 | T1920 | T1921 | ................. | T2015 | T2016 |

## FIG. 6

600

EP 4 589 875 A1

FIG. 7

EP 4 589 875 A1

| Time | Cellname | DL_UE_Thp | DL_Spectral_Eff | RRC_setup_SR | PDU_session_setup_SR | DCR | DCR (QCI1) | Scell addition FR | HO_Succ Rate | weightForSCellSelection |
|---|---|---|---|---|---|---|---|---|---|---|
| T | Cell_A | - | - | - | - | - | - | - | - | |

801

| Time | Cellname | DL_UE_Thp | DL_Spectral_Eff | RRC_setup_SR | PDU_session_setup_SR | DCR | DCR (QCI1) | Scell addition FR | HO_Succ Rate |
|---|---|---|---|---|---|---|---|---|---|
| T+x | Cell_A | - | - | - | - | - | - | - | - |

802

800

FIG. 8

FIG. 9

Reward vs bins

| | Thp_cell | Thp_group | SE_cell |
|---|---|---|---|
| >15% | 5 | 5 | 5 |
| >5% & <=15% | 2 | 2 | 2 |
| 0-5% | 1 | 1 | 1 |
| <0 & >= -5% | -1 | -1 | -1 |
| <-5% & >= -15% | -2 | -2 | -2 |
| <-15% | -5 | -5 | -5 |

1006

1001

Input reference to objective function
- DL UE Thp_Cell,
- DL_UE Thp_Group,
- Spectral Efficiency

1002

Perform scaling of Thp & SE across each cell_group aggregations within a sector.

Scaling_factor = "Cell_group value" / "Max[Cell_group value within sector]"

1003

For each Cell_Group, Calculate Rate of change (T0,T1) for Thp & SE.

Calculate scaled_rate_of_change = Rate_of_change * Scaling_factor

1004

Convert scaled_rate_of_change into Rewards as per the mapping provided in configuration

1005

Calculate Consolidated Reward = Sum[Reward_i * Weight_i]

Where, Weight_i = weight assigned to each KPI in configuration file

1000

FIG. 10

Across each timestamp, get KPI Feedback label per KPI for scoring — 1101
- Improved
- Degraded
- No change

Translate the KPI labels into *KPI_score* as per the mapping provided in configuration — 1102

Calculate overall *KPI_Feedback_Score* = [KPI_score(i)^Exponent] * Weight(i)

Where, i = KPI — 1103

| KPIs | Increase | No change | Decrease | Exponent | Weight |
|---|---|---|---|---|---|
| RRC setup SR | 1.5 | 0.1 | -1.75 | 3 | 1 |
| PDU Session Setup SR | 1.5 | 0.1 | -1.75 | 3 | 1 |
| DCR | -1.75 | 0.1 | 1.5 | 3 | 1 |
| DCR (QCI1) | -1.75 | 0.1 | 1.5 | 3 | 1 |
| Scell addition FR | -1.75 | 0.1 | 1.5 | 3 | 1 |
| HOSR | 1.5 | 0.1 | -1.75 | 3 | 1 |

1104

| RRC setup SR | PDU Session Setup SR | DCR | DCR (QCI1) | Scell addition FR | HOSR | Score |
|---|---|---|---|---|---|---|
| 1.5 | 0.1 | 0.1 | 0.1 | 0.1 | 0.1 | 0.5633 |
| 1.5 | 1.5 | 0.1 | 0.1 | 0.1 | 0.1 | 1.1257 |
| 1.5 | 1.5 | 1.5 | 0.1 | 0.1 | 0.1 | 1.688 |
| 1.5 | 1.5 | 1.5 | 1.5 | 1.5 | 1.5 | 3.375 |
| -1.75 | 0.1 | 0.1 | 0.1 | 0.1 | 0.1 | -0.8924 |
| -1.75 | 1.75 | 0.1 | 0.1 | 0.1 | 0.1 | -1.7858 |
| -1.75 | -1.75 | -1.75 | 0.1 | 0.1 | 0.1 | -2.6792 |
| -1.75 | -1.75 | -1.75 | -1.75 | -1.75 | -1.75 | -5.3594 |
| -1.75 | 0.1 | 0.1 | 0.1 | 0.1 | 1.5 | -0.3301 |
| -1.75 | -1.75 | 0.1 | 0.1 | 1.5 | 1.5 | -0.6611 |
| -1.75 | -1.75 | -1.75 | 0.1 | 0.1 | 1.5 | -2.1169 |
| -1.75 | 0.1 | 0.1 | 1.5 | 1.5 | 1.5 | 0.7946 |

1105

1100

FIG. 11

EP 4 589 875 A1

| Time-stamp (T) | WK_0 (Current week) | | WK_-1 | WK_-2 | WK_-3 |
|---|---|---|---|---|---|
| 9:00 - 9:15 (t1) | KPI_Wk_0_t1 | | KPI_Wk_-1_t1 | KPI_Wk_-2_t1 | KPI_Wk_-3_t1 |
| 9:15 - 9:30 (t2) | KPI_Wk_0_t2 | | KPI_Wk_-1_t2 | KPI_Wk_-2_t2 | KPI_Wk_-3_t2 |
| . . . . . . | . . . . . . | | . . . . . . | . . . . . . | . . . . . . |

Distribution-1

Distribution-2

1200

FIG. 12

For a particular
Timestamp = t*

| WK_0 (Current week) |
| --- |
| KPI_Wk_0_t* |

| WK_-1 | WK_-2 | WK_-3 |
| --- | --- | --- |
| KPI_Wk_-1_t* | KPI_Wk_-2_t* | KPI_Wk_-3_t* |

T-test

Trend: Change / No_change
Change: Increase / Decrease

1300

FIG. 13

◄--- Move by 1 step ---►
size

Baseline - Range          Baseline          Baseline + Range

1400

FIG. 14

Europäisches
Patentamt

European
Patent Office

Office européen
des brevets

## EUROPEAN SEARCH REPORT

**Application Number**

EP 24 15 2652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/007944 A1 (FAXÉN LINNEA [SE] ET AL) 4 January 2024 (2024-01-04) | 1,5-12 | INV.<br>H04L5/00 |
| Y | * paragraph [0103] - paragraph [0109]; figure 11 *<br>* paragraph [0151] - paragraph [0185] *<br>* claims 11,18,20 * | 2-5 | H04W24/02 |
| | - - - - - | | |
| X | US 2020/106536 A1 (BEDEKAR ANAND [US]) 2 April 2020 (2020-04-02) | 1-4,6-12 | |
| Y | * paragraph [0164] - paragraph [0166] *<br>* paragraph [0169] - paragraph [0179] *<br>* paragraph [0207] - paragraph [0218] * | 5 | |
| | - - - - - | | |
| Y | WO 2022/139644 A1 (ERICSSON TELEFON AB L M [SE]) 30 June 2022 (2022-06-30)<br>* paragraph [0035] - paragraph [0041]; figure 4 *<br>* paragraph [0044] *<br>* paragraph [0049] - paragraph [0054] * | 2-4 | |
| | - - - - - | | |

**TECHNICAL FIELDS SEARCHED (IPC)**

H04L
G06N
H04W

The present search report has been drawn up for all claims

| Place of search | Date of completion of the search | Examiner |
|---|---|---|
| The Hague | 13 June 2024 | Cortés Gómez, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 2652

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | | Publication date |
|---|---|---|---|---|
| US 2024007944 A1 | 04-01-2024 | CN | 116746104 A | 12-09-2023 |
| | | EP | 4252379 A1 | 04-10-2023 |
| | | US | 2024007944 A1 | 04-01-2024 |
| | | WO | 2022113039 A1 | 02-06-2022 |
| US 2020106536 A1 | 02-04-2020 | US | 2020106536 A1 | 02-04-2020 |
| | | US | 2020252142 A1 | 06-08-2020 |
| WO 2022139644 A1 | 30-06-2022 | EP | 4268402 A1 | 01-11-2023 |
| | | US | 2024048338 A1 | 08-02-2024 |
| | | WO | 2022139644 A1 | 30-06-2022 |

EPO FORM P0459

For more details about this annex : see Official Journal of the European Patent Office, No. 12/82